(19) Europäisches Patentamt

European Patent Office

Office européen des brevets

(11) Veröffentlichungsnummer: **0 224 674 B1**

(12) **EUROPÄISCHE PATENTSCHRIFT**

(45) Veröffentlichungstag der Patentschrift: **04.03.92**

(51) Int. Cl.⁵: **B60C 23/00**

(21) Anmeldenummer: **86113636.4**

(22) Anmeldetag: **02.10.86**

(54) **Reifendruckreguliereinrichtung für Nutzfahrzeuge.**

(30) Priorität: **04.12.85 DE 3542851**

(43) Veröffentlichungstag der Anmeldung:
**10.06.87 Patentblatt 87/24**

(45) Bekanntmachung des Hinweises auf die
Patenterteilung:
**04.03.92 Patentblatt 92/10**

(84) Benannte Vertragsstaaten:
**AT BE CH ES FR GR LI LU NL SE**

(56) Entgegenhaltungen:
**EP-A- 0 193 452**
**DE-A- 3 303 163**
**US-A- 3 705 614**
**US-A- 4 434 833**
**US-A- 4 470 506**

(73) Patentinhaber: **MAN Nutzfahrzeuge Aktiengesellschaft**
**Dachauer Strasse 667 Postfach 50 06 20**
**W-8000 München 50(DE)**

(72) Erfinder: **Oerter, Johann-Georg**
**Wilhelm-Riehl-Strasse 20**
**W-8000 München 21(DE)**

# Beschreibung

Die Erfindung betrifft eine Reifendruckreguliereinrichtung für Nutzfahrzeuge mit axialer Druckluftzuführung durch die Radnabe in einen Ringraum zwischen Radnabe und Radnabengehäuse, der mittels Dichtungen gegenüber den Öl- undSchmierstoff führenden Räumen abgedichtet ist, gemäß den Oberbegriff des Anspruchs 1.

Es sind Reifendruckreguliereinrichtungen in vielfältigen Ausführungsformen nach obigem Gattungsbegriff bekannt, so z.B. eine Ausführung nach US-A 3,705,614. Nachteilig bei den bekannten Einrichtungen ist der hohe Bearbeitungsaufwand an den großvolumigen Teilen der Radnabe und des Radnabengehäuses, wo es für die Dichtungsauflage vor allem auf eine feingeschliffene Ablauffläche für die Lippen der Dichtringe ankommt. Zum ersten erfordert die Bearbeitung größere Werkzeugmaschinen, zum anderen, und das ist wesentlich, können die geschliffenen Laufflächen während des Transportes leicht beschädigt werden.

Der Erfindung liegt die Aufgabe zugrunde, die Abdichtung des Ringraumes zwischen Radnabengehäuse und Radnabe optimal, beschädigungsfrei und montagefreundlich zu gestalten.

Dies wird erfindungsgemäß dadurch erreicht, daß zur Abdichtung des Ringraumes zwischen Radnabengehäuse und Radnabe mehrgängige Labyrinthdichtungen vorgesehen sind, die in einer radnabenseitigen Hülse und in einer radnabengehäuseseitigen Hülse gefaßt sind. Hierbei haben wir es mit einer berührungslosen Dichtung zu tun, wodurch eine dauerhafte und wartungsfreie Abdichtung des Ringraumes erzielt wird. Der Effekt wird noch dadurch verstärkt, daß die aus Stahl gepreßten Lamellen mit Kunststoff beflockt sind, so daß sich ein extrem niedriger Reibungskoeffizient ergibt. Eine weitere Herabsetzung des Reifenkoeffizienten wird durch das Einbringen von Lithiumoder Kalkseifenfett erreicht, wodurch gleichzeitig der Ringraum für die Druckluftverteilung gegen Öleintritt aus den mit Öl beaufschlagten Räumen gesichert ist.

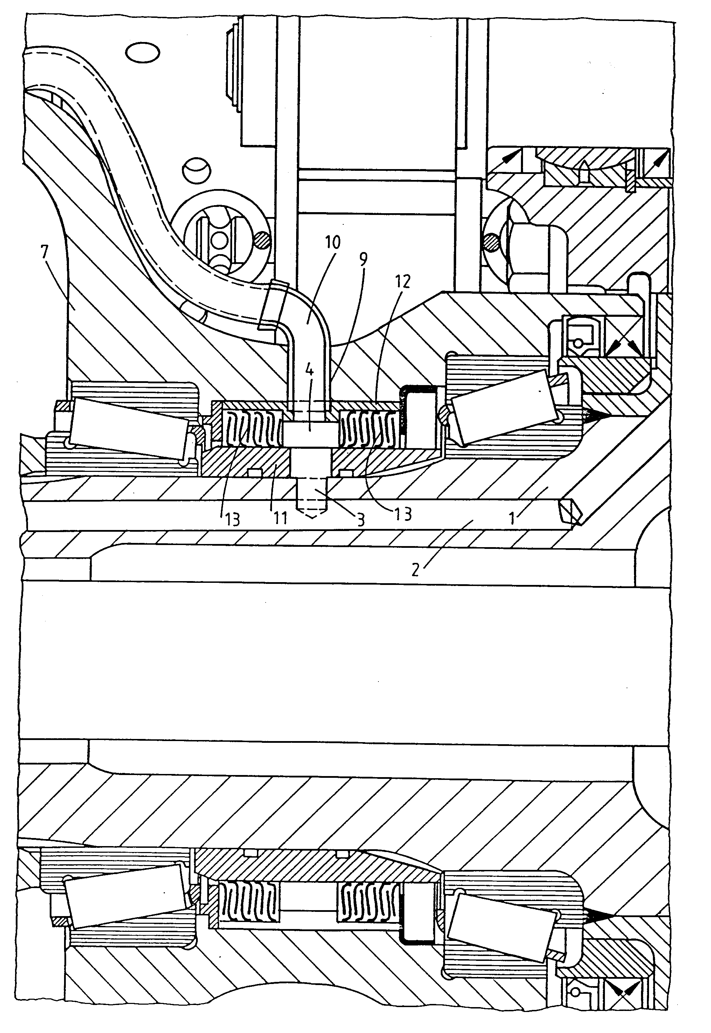

Weitere Vorteile und Merkmale der Erfindung sind den Ansprüchen, der Beschreibung und der Zeichnung zu entnehmen.

Die Zeichnung zeigt einen Ausschnitt des abgedichteten Ringraumes zwischen Radnabe und Radnabengehäuse.

Der Ringraum 4 ist durch in Hülsen 11, 12 angeordnete Labyrinthdichtungen 13 abgedichtet. Die Dichtungslamellen sind aus Stahl gepreßte, mit Kunststoffbeflockte Lamellen, wobei die Hohlräume zwischen den Lamellen mit Lithium- oder Kalkseifenfett gefüllt sind. In einer Bohrung 9 des Radnabengehäuses 7 ist ein Rohr 10, den Ringraum 4 beaufschlagend, fest verankert. Über Rohr 10 und weitere, in der Zeichnung nicht dargestellte Zuleitungsorgane, kann dem Reifen Druckluft zugeführt werden.

## Patentansprüche

1. Reifendruckreguliereinrichtung für Nutzfahrzeuge mit axialer Druckluftzuführung durch die Radnabe (1) in einen Ringraum (4) zwischen Radnabe (1) und Radnabengehäuse, (7) der mittels Dichtungen (13) gegenüber den Öl- und Schmierstoff führenden Räumen abgedichtet ist, dadurch gekennzeichnet, daß zur Abdichtung des Ringraumes (4) zwischen Radnabengehäuse (7) und Radnabe (1) mehrgängige Labyrinthdichtungen (13) vorgesehen sind, die in einer radnabenseitigen Hülse (11) und in einer radnabengehäuseseitigen Hülse (12) gefaßt sind.

2. Reifendruckreguliereinrichtung nach Anspruch 1, dadurch gekennzeichnet, daß die Labyrinthdichtungen (13) aus Stahl gepreßte, mit Kunststoff beflockte Lamellen sind.

3. Reifendruckreguliereinrichtung nach den Ansprüchen 1 oder 2, dadurch gekennzeichnet, daß die Labyrinthdichtungen (13) mit Lithiumoder Kalkseifenfett gefüllt sind.

## Claims

1. Tyre pressure control device for commercial vehicles with axial compressed air supply through wheel hub (1) into an annular space (4) between wheel hub (1) and wheel hub housing (7), which space is sealed off from compartments containing oil and lubricant by means of seals (13), characterised by the fact that multiple-path labyrinth seals (13) are provided to seal the annular space (4) between the wheel hub housing (7) and the wheel hub (1), said labyrinth seals being held in a bush (11) on the wheel hub and a bush (12) on the wheel hub housing.

2. Tyre pressure control device as described in Claim 1, characterised by the fact that the labyrinth seals (13) are discs pressed from steel and flock-coated with plastic.

3. Tyre pressure control device as described in Claims 1 or 2, characterised by the fact that the labyrinth seals (13) are filled with lithium or lime-soap grease.

## Revendications

1. Dispositif de réglage de pression de pneumatiques pour véhicule utilitaire avec introduction axiale de pression d'air par le moyeu de la roue (1) dans un espace annulaire (4) entre le moyeu de la roue (1) et le boîtier de moyeu (7) de la roue qui est rendu étanche au moyen de joint (13) vis-à-vis des volumes distribuant l'huile et les lubrifiants, caractérisé en ce que pour rendre étanche l'espace annulaire (4) entre le boîtier de moyeu de roue (7) et le moyeu de roue (1), on prévoit des joints à labyrinthe (13) à plusieurs passages, qui sont logés dans une douille (11) du côté du moyeu de roue et dans une douille du côté boîtier de moyeu de roue (12).

2. Dispositif de réglage de pression de pneumatique selon la revendication 1, caractérisé en ce que les joints à labyrinthes (13) sont des lamelles en acier comprimées floquées avec de la matière plastique.

3. Dispositif de réglage de pression de pneumatique selon les revendications 1 ou 2, caractérisé en ce que les joints à labyrinthe (13) sont remplis de graisse au lithium ou au calcium.